# EUROPÄISCHE PATENTANMELDUNG

(11) **EP 2 048 461 A2**
(43) Veröffentlichungstag der Anmeldung: **15.04.2009**
(21) Anmeldenummer: 08017655.5
(22) Anmeldetag: 08.10.2008
(51) Int. Cl.: F25D 23/00

(54) **Kühl- und/oder Gefriergerät**

(30) Priorität: 08.10.2007 DE 202007014026 U; 19.12.2007 DE 202007017691 U
(71) Anmelder: Liebherr-Hausgeräte Ochsenhausen GmbH, 88416 Ochsenhausen (DE)
(72) Erfinder: Laube, Viktor, Dipl.-Ing., 88416 Ochsenhausen (DE); Oelmaier, Klaus, Dipl.-Ing., 88416 Ochsenhausen (DE)
(74) Vertreter: Herrmann, Uwe

(57) **Zusammenfassung**

Die Erfindung betrifft ein Kühl- und/oder Gefriergerät (6) mit einem Gerätesockel und einem Gebläse (2) zur Erzeugung einer Luftströmung im Gerätesockel, wobei das Gerät eine Steuer- oder Regeleinheit aufweist, mittels derer die Drehzahl und/oder die Drehrichtung des Gebläses (2) veränderbar ist.

## Beschreibung

Die vorliegende Erfindung betrifft ein Kühl- und/oder Gefriergerät mit einem Gerätesockel und einem Gebläse zur Erzeugung einer Luftströmung im Gerätesockel.

Aus dem Stand der Technik sind Kühlgeräte bekannt, die einen im Bereich des Gerätesockels angeordneten sogenannten Aggregatträger aufweisen, auf dem Komponenten angeordnet sind, die der Kälteerzeugung dienen. Bei diesen Komponenten handelt es sich beispielsweise um einen Kompressor, einen Verflüssiger sowie ein Gebläse, das die Aufgabe hat, eine Luftströmung im Bereich des Gerätesockels zu erzeugen. Eine solche Luftströmung kann beispielsweise dazu erforderlich sein, Wärme vom Verflüssiger, Kompressor oder anderen Komponenten abzuführen oder die Verdunstungsleistung der Verdunstungsschale durch Abtransport feuchter Luft zu steigern.

Bei aus dem Stand der Technik bekannten Geräten, wird das Gebläse mit einer festen, das heißt nicht veränderlichen Drehzahl betrieben.

Der vorliegenden Erfindung liegt die Aufgabe zugrunde, ein Kühl- und/oder Gefriergerät der eingangs genannten Art dahingehend weiterzubilden, das dessen Betrieb gegenüber vorbekannten Geräten eine größere Flexibilität aufweist.

Diese Aufgabe wird durch ein Kühl- und/oder Gefriergerät mit den Merkmalen des Anspruchs 1 gelöst. Danach ist vorgesehen, dass das Gerät eine mit dem Gebläse unmittelbar oder mittelbar in Verbindung stehende Steuer- oder Regeleinheit aufweist, mittels derer die Drehzahl und/oder die Drehrichtung des Gebläses veränderbar ist. Erfindungsgemäß ist somit vorgesehen, dass die Drehzahl und/oder die Drehrichtung des Gebläses nicht zeitlich konstant ist, sondern veränderlich ist, und zwar vorzugsweise je nach geforderter Kälteleistung.

Eine solche Veränderung von Drehzahl und/oder Drehrichtung kann beispielsweise nach einem vorgegebenen Schema, d. h. entsprechend gespeicherter Vorgaben erfolgen. Danach kann beispielsweise vorgesehen sein, dass tagsüber aufgrund der häufigeren Türöffnung und somit aufgrund des größeren Wärmeeintrags eine höhere Drehzahl des Gebläses gewählt wird als dies nachts der Fall ist.

Die gespeicherten Werte nach denen Drehzahl und/oder Drehrichtung geändert werden, können beispielsweise fest vorgegeben sein oder auch durch einen Nutzer des Gerätes veränderbar sein.

In bevorzugter Ausgestaltung der Erfindung ist vorgesehen, dass das Gerät Erfassungsmittel zur Erfassung wenigstens eines Parameters aufweist und dass die Steuer- oder Regeleinheit derart ausgeführt ist, dass sie die Drehzahl und/oder die Drehrichtung des Gebläses in Abhängigkeit dieses wenigstens einen gemessenen Parameters verändert. Auf diese Weise ist es möglich, den Luftvolumenstrom bzw. die Strömungsrichtung der Luft an verschiedene Betriebszustände anzupassen. In Abhängigkeit des Luftvolumenstroms ändert sich auch der Geräuschpegel, der vom Gebläse und der Luftströmung verursacht wird. Dadurch kann hinsichtlich Geräusch, Kälteleistung und Energieverbrauch für jeden Betriebszustand die optimale gewählte Drehzahl und Drehrichtung eingestellt werden.

Denkbar ist es beispielsweise, dass in Betriebszuständen, in denen eine geringe Kälteleistung erforderlich ist, die Gebläsedrehzahl und damit auch der Geräuschpegel entsprechend abgesenkt werden.

Weiterhin kann vorgesehen sein, dass in Betriebszuständen mit hoher Kälteleistungsanforderung durch Erhöhung der Gebläsedrehzahl ein höherer Energieumsatz am Verflüssiger erreicht wird, was letztlich dazu führt, dass eine höhere Kälteleistung zur Verfügung gestellt wird. Dies ermöglicht den Einsatz eines Kompressors mit vergleichsweise geringer Kälteleistung. Ein weiterer Vorteil des Absenkens der Gebläsedrehzahl besteht darin, dass die elektrische Leistungsaufnahme des Gebläses und damit der Energieverbrauch des Gerätes bei vergleichsweise niedriger Kälteleistung verringert wird.

Wie oben ausgeführt, ist das Gebläse vorzugsweise auf oder im Bereich eines Aggregatträger(s) angeordnet, der sich im Gerätesockel befindet und auf dem eine oder mehrere weitere Komponenten des Gerätes, vorzugsweise Komponenten zur Kälteerzeugung angeordnet sind.

In einer bevorzugten Ausgestaltung der Erfindung ist vorgesehen, dass das Gerät einen Kompressor und/oder einen Verflüssiger und/oder eine Verdunstungsschale aufweist, die im Gerätesockel und vorzugsweise auf dem Aggregatträger angeordnet sind.

Die genannten Erfassungsmittel können derart ausgeführt sein, dass sie einen oder auch mehrere Betriebsparameter des Gerätes messen. Denkbar ist es somit, dass die Gebläsedrehzahl und/oder -drehrichtung von einem oder auch von mehreren Betriebsparametern, wie beispielsweise Öffnungsfrequenz der Tür oder Klappe oder Schublade und Öffnungsdauer der Tür oder Klappe oder Schublade des Gerätes abhängen.

Bei dem wenigstens einen Betriebsparameter kann es sich beispielsweise um die Kompressordrehzahl und/oder um die Lauf- und Standzeiten des Kompressors und/oder um die relative Einschaltdauer des Kompressors handeln. Denkbar ist es beispielsweise, dass in Verbindung mit einem drehzahlgeregelten Kompressor die Gebläsedrehzahl in Abhängigkeit von der Kompressordrehzahl geregelt wird.

Bei dem wenigstens einen Betriebsparameter kann es sich des weiteren um die Stellung des Temperaturreglers des Geräts handeln. Stellt der Benutzer den Temperaturregler des Gerätes auf einen hohen Wert, das heißt wird eine hohe Kälteleistung benötigt, kann vorgesehen sein, dass die Gebläsedrehzahl bis zum Erreichen der Temperatur oder auch länger vergleichsweise hoch eingestellt wird. Wird demgegenüber eine kleinere Reglerstellung gewählt, das heißt wird nur ein geringer Kältebedarf gefordert, kann vorgesehen sein, dass das Gebläse mit einer vergleichsweise geringen Drehzahl betrieben wird.

In weiterer Ausgestaltung der Erfindung ist vorgesehen, dass es sich bei dem wenigstens einen Betriebsparameter um die Verflüssigungstemperatur handelt. Liegt beispielsweise bei Verschmutzung des Verflüssigers die Verflüssigungstemperatur in einem unzulässig hohen Bereich, kann die Gebläsedrehzahl entsprechend erhöht werden.

Weiterhin kann vorgesehen sein, dass es sich bei dem wenigstens einen Betriebsparameter um die Temperatur und/oder um die Temperaturänderung bzw. deren Geschwindigkeit und/oder die Luftfeuchtigkeit und/oder die Luftfeuchtigkeitsänderung des zu kühlenden Raumes des Gerätes handelt.

In weiterer Ausgestaltung der Erfindung kann vorgesehen sein, dass die Drehzahl und/oder Drehrichtung des Gebläses vom Betriebszustand des Gerätes abhängt. Befindet sich das Gerät beispielsweise in der Abtauphase, kann vorgesehen sein, dass die Gebläsedrehzahl für eine bestimmte Zeitdauer bzw. für die Zeitdauer der Abtauphase erhöht wird und anschließend das Gebläse wieder mit der Nenndrehzahl betrieben wird.

In weiterer Ausgestaltung der Erfindung ist vorgesehen, dass es sich bei dem Betriebsparameter um die Anzahl und/oder um die Dauer der Tür- bzw. Klappenöffnungen handelt. Somit ist es beispielsweise denkbar, in Abhängigkeit der Türöffnungen bzw. Türöffnungsdauer eine entsprechende Ventilatordrehzahl einzustellen.

Die Erfassungsmittel können alternativ oder zusätzlich auch derart ausgeführt sein, dass sie nicht unmittelbar das Gerät betreffende Parameter, sondern Parameter der Umgebungsatmosphäre erfassen. Denkbar sind beispielsweise die Erfassung der Umgebungstemperatur und/oder der Luftfeuchtigkeit der Geräteumgebung.

Denkbar ist es weiterhin, dass die Erfassungsmittel derart ausgeführt sind, dass sie die Temperatur im Aggregateraum, beispielsweise die Temperatur eines Aggregateträgers und/oder in einem Abluftkanal des Gerätes erfassen.

Die obigen Ausführungen beziehen sich grundsätzlich nicht nur auf die Gebläsedrehzahl, sondern gelten sinngemäß auch zusätzlich oder alternativ für die Drehrichtung des Gebläses.

Die einzige Figur zeigt in einer schematischen Ansicht die Rückseite eines Gerätes mit Sockelaggregat.

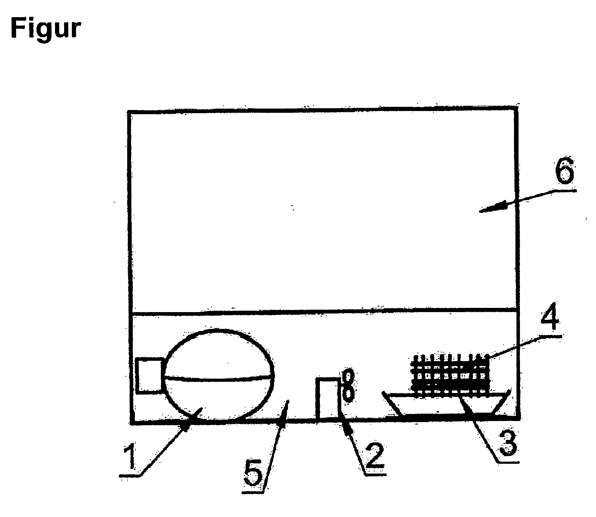

Figur 1 zeigt das Kühl- und/oder Gefriergerät 6 mit dem Gerätesockelaggregat 5. Auf diesem Sockelaggregat, das in das Gerät 6 einsetzbar und aus dem Gerät entnehmbar sein kann, befindet sich in dem in der Figur dargestellten Ausführungsbeispiel ein Kompressor 1, ein Gebläse 2, eine Verdunstungsschale 3 und ein Verflüssiger 4.

Des weiteren weist das Gerät nicht näher dargestellte Erfassungsmittel auf, mittels derer ein oder mehrere das Gerät oder auch die Geräteumgebung betreffende Parameter erfaßbar sind. Des weiteren ist eine Steuer- und/oder Regeleinheit vorgesehen, die exemplarisch die folgenden Betriebszustände erfassen kann und das Gebläse entsprechend ansteuern kann.

Wird beispielsweise der Parameter "Umgebungstemperatur" erfaßt, kann vorgesehen sein, dass bei niedriger Umgebungstemperatur das Gebläse 2 mit einer geringen Drehzahl und bei hoher Umgebungstemperatur aufgrund der höheren erforderlichen Kälteleistung mit einer vergleichsweise hohen Drehzahl betrieben wird.

Wird der Parameter "Kompressordrehzahl" gemessen, kann insbesondere in Verbindung mit einem drehzahlgeregelten Kompressor die Gebläsedrehzahl in Abhängigkeit von der Kompressordrehzahl geregelt werden.

Wird beispielsweise der Parameter "Lauf- und Standzeiten des Kompressors" gemessen, kann in Abhängigkeit dieses Parameters eine entsprechende Gebläsedrehzahl verwendet werden. Entsprechendes gilt für den Parameter "relative Einschaltdauer des Kompressors".

Auch ist es möglich, die Anzahl und/oder die Dauer der Öffnungen der Tür oder Klappe zu messen und die Gebläsedrehzahl in Abhängigkeit der Anzahl und/oder der Dauer zu wählen. Bei vielen Türöffnungen bzw. langer Türöffnungsdauer wird aufgrund des erhöhten Wärmeeintrages in den zu kühlenden Raum eine höhere Gebläsedrehzahl erforderlich sein, als bei vergleichsweise wenigen Türöffnungen bzw. kurzer Türöffnungsdauer.

Ein weiterer Parameter kann die "Reglerstellung" sein. In Abhängigkeit der seitens des Benutzers eingestellten Reglerstellung kann die Gebläsedrehzahl eingestellt werden. Bei "warmer Reglerstellung", d. h. bei geringer Kälteleistung kann das Gebläse mit geringer Drehzahl und bei "kalter Reglerstellung", d. h. bei hoher Kälteleistung mit hoher Drehzahl betrieben werden.

Auch ist es denkbar, den Betriebszustand dahingehend zu erfassen, ob sich das Gerät in einer Abtauphase befindet. Denkbar ist es, vor und unmittelbar nach einer Abtauphase die Gebläsedrehzahl für eine bestimmte Zeitdauer zu erhöhen. Anschließend kann das Gerät wieder mit der Nenndrehzahl betrieben werden.

Ein weiterer Parameter ist der Temperaturanstieg im Gerät. In diesem Fall wird nicht der Temperaturwert als solcher, sondern die Geschwindigkeit erfaßt, mit der sich der Temperaturwert ändert. Erfolgt beispielsweise nach einer oder mehreren Türöffnungen ein rascher Temperaturanstieg im Gerät, wird die Ventilatordrehzahl erhöht.

Auch ist es denkbar in Abhängigkeit der relativen Luftfeuchtigkeit die Drehzahl des Gebläses zu variieren.

Wie oben ausgeführt, besteht ein weiterer Parameter in der Verflüssigungstemperatur. Liegt eine Verschmutzung des Verflüssigers vor bzw. liegt die Verflüssigungstemperatur in einem unzulässig hohen Bereich, kann die Gebläsedrehzahl erhöht werden.

Wie oben ausgeführt, gelten die obigen Ausführungen nicht nur für die Gebläsedrehzahl, sondern alternativ oder zusätzlich auch für die Drehrichtung des Laufrades des Gebläses. Insbesondere bei einem DC-Gebläse besteht die Möglichkeit, die Drehrichtung des Laufrades und damit auch die Strömungsrichtung umzudrehen. Dadurch kann die Verschmutzung des Verflüssigers beispielsweise mit Staub verhindert oder verringert werden. Eine solche Strömungsrichtungsumkehr kann automatisch in regelmäßigen Intervallen, manuell oder in Abhängigkeit eines oder mehrerer der gemessenen Parameter erfolgen.

## Patentansprüche

1. Kühl- und/oder Gefriergerät (6) mit einem Gerätesockel und einem Gebläse (2) zur Erzeugung einer Luftströmung im Gerätesockel, **dadurch gekennzeichnet, dass** das Gerät eine Steuer- oder Regeleinheit aufweist, mittels derer die Drehzahl und/oder die Drehrichtung des Gebläses (2) veränderbar ist.

2. Kühl- und/oder Gefriergerät (6) nach Anspruch 1, **dadurch gekennzeichnet, dass** die Steuer- oder Regeleinheit derart ausgeführt ist, dass sie die Drehzahl und/oder die Drehrichtung des Gebläses (2) nach abgespeicherten Vorgaben einstellt.

3. Kühl- und/oder Gefriergerät (6) nach Anspruch 1 oder 2, **dadurch gekennzeichnet, dass** das Gerät Erfassungsmittel zur Erfassung wenigstens eines Parameters aufweist und dass die Steuer- oder Regeleinheit derart ausgeführt ist, dass sie die Drehzahl und/oder die Drehrichtung des Gebläses (2) in Abhängigkeit des wenigstens einen gemessenen Parameters verändert.

4. Kühl- und/oder Gefriergerät (6) nach einem der vorhergehenden Ansprüche, **dadurch gekennzeichnet, dass** das Gebläse (2) auf einem Aggregatträger (5) angeordnet ist, der sich im Gerätesockel befindet und auf dem ein oder mehrere weitere Komponenten des Gerätes (6) angeordnet sind.

5. Kühl- und/oder Gefriergerät (6) nach einem der vorhergehenden Ansprüche, **dadurch gekennzeichnet, dass** das Gerät mindestens einen Kompressor (1) und/oder mindestens einen Verflüssiger (4) und/oder mindestens eine Verdunstungsschale (3) aufweist, die im Gerätesockel und vorzugsweise auf dem Aggregatträger (5) gemäß Anspruch 4 angeordnet sind.

6. Kühl- und/oder Gefriergerät (6) nach einem der Ansprüche 3 bis 5, **dadurch gekennzeichnet, dass** die Erfassungsmittel derart ausgeführt sind, dass sie einen oder mehrere Betriebsparameter des Gerätes (6) messen.

7. Kühl- und/oder Gefriergerät (6) nach Anspruch 6, **dadurch gekennzeichnet, dass** es sich bei dem wenigstens einen Betriebsparameter um die Kompressordrehzahl und/oder um die Lauf- und Standzeiten des Kompressors (1) und/oder um die relative Einschaltdauer des Kompressors (1) handelt.

8. Kühl- und/oder Gefriergerät (6) nach Anspruch 6 oder 7, **dadurch gekennzeichnet, dass** es sich bei dem wenigstens einen Betriebsparameter um die Stellung des Temperaturreglers des Geräts (6) handelt.

9. Kühl- und/oder Gefriergerät (6) nach einem der Ansprüche 6 bis 8, **dadurch gekennzeichnet, dass** es sich bei dem wenigstens einen Betriebsparameter um die Verflüssigungstemperatur handelt.

10. Kühl- und/oder Gefriergerät (6) nach einem der Ansprüche 6 bis 9, **dadurch gekennzeichnet, dass** es sich bei dem wenigstens einen Betriebsparameter um die Temperatur und/oder um die Temperaturänderung und/oder die Luftfeuchtigkeit und/oder die Luftfeuchtigkeitsänderung des zu kühlenden Raumes des Gerätes (6) handelt.

11. Kühl- und/oder Gefriergerät (6) nach Anspruch 6 oder 10, **dadurch gekennzeichnet, dass** es sich bei dem wenigstens einen Betriebsparameter um einen Betriebszustand des Gerätes (6) handelt, wobei der Betriebszustand die Zustände "Abtauphase" und "Normalbetrieb" umfasst.

12. Kühl- und/oder Gefriergerät (6) nach einem der Ansprüche 6 bis 11, **dadurch gekennzeichnet, dass** es sich bei dem wenigstens einen Betriebsparameter um die Anzahl und/oder um die Dauer der Öffnungen der Tür und/oder Klappe und/oder Schublade handelt.

13. Kühl- und/oder Gefriergerät (6) nach einem der Ansprüche 3 bis 12, **dadurch gekennzeichnet, dass** Erfassungsmittel derart ausgeführt sind, dass sie die Umgebungstemperatur und/oder die Luftfeuchtigkeit der Geräteumgebung erfassen.

14. Kühl- und/oder Gefriergerät (6) nach einem der Ansprüche 3 bis 13, **dadurch gekennzeichnet, dass** Erfassungsmittel derart ausgeführt sind, dass sie die Temperatur im Aggregateraum und/oder in einem Abluftkanal erfassen.
